Europäisches Patentamt

(19) European Patent Office

Office européen des brevets

(11) **EP 0 624 552 B1**

(12) **EUROPEAN PATENT SPECIFICATION**

(45) Date of publication and mention
of the grant of the patent:
**02.12.1998 Bulletin 1998/49**

(51) Int. Cl.[6]: **C01G 1/02**, C01G 45/00,
H01M 4/50, C01G 51/00

(21) Application number: **94302689.8**

(22) Date of filing: **15.04.1994**

(54) **Novel method for preparing solid solution materials for secondary non-aqueous batteries**

Neues Verfahren zur Herstellung von festen Lösungen für sekundäre nicht-wässrige Batterien

Nouvelle méthode pour préparer des matériaux solution solide pour batteries non aqueuses secondaires

(84) Designated Contracting States:
**AT BE CH DE DK ES FR GB GR IE IT LI LU MC NL PT SE**

(30) Priority: **14.05.1993 CA 2096264**

(43) Date of publication of application:
**17.11.1994 Bulletin 1994/46**

(73) Proprietor:
**MOLI ENERGY (1990) LIMITED
Maple Ridge, B.C., V2X 9E7 (CA)**

(72) Inventors:
  • **Dahn, Jeffrey Raymond
  Surrey, B.C. V4N 3G4 (CA)**
  • **Rossen, Erik
  North Vancouver, B.C. V7K 1R2 (CA)**
  • **Reimers, Jan N.
  Maple Ridge, British Columbia, V2X 3N7 (CA)**
  • **Fuller, Eric Wayne
  Maple Ridge, B.C. V2X 8T7 (CA)**

(74) Representative:
**Silverman, Warren et al
Haseltine Lake & Co.
Imperial House,
15-19 Kingsway
London WC2B 6UD (GB)**

(56) References cited:
**GB-A- 2 087 858**

  • **MATERIALS RESEARCH BULLETIN., vol.17,
  1982, OXFORD GB pages 117 - 123 CLAUDE
  DELMAS ET AL 'A NEW VARIETY OF LiCoO2
  WITH UNUSUAL OXYGEN PACKiNG OBTAINED
  BY EXCHANGE REACTION'**
  • **PATENT ABSTRACTS OF JAPAN vol. 12, no. 407
  (E-675) 27 October 1988 & JP-A-63 148 550
  (SANYO ELECTRIC CO) 21 June 1988**
  • **PATENT ABSTRACTS OF JAPAN vol. 5, no. 137
  (E-072) 29 August 1981 & JP-A-56 073 864
  (MATSUSHITA ELECTRIC IND) 18 June 1981**

**Description**

This invention relates to solid solution oxides, especially lithiated manganese oxides, processes for synthesizing these materials, and their use as active electrode materials in electrochemical cells. In particular, the invention relates to the synthesis of such materials for use as cathodes in lithium ion rechargeable batteries.

Lithium batteries are becoming increasingly popular in the market place as they offer advantages of high voltage and energy density over conventional aqueous technologies. Recent developments in the field are allowing lithium battery technologies to meet the demands of ever greater energy density requirements for electronics applications.

Primary lithium batteries and historically secondary lithium batteries have used metallic lithium or a lithium alloy for the anode and often a transition metal chalcogenide for the corresponding cathode. The discharge process of batteries constructed in this way involves the transfer of lithium atoms from the anode into the host cathode. Thus, primary cells preferably have minimal lithium in the cathode as fabricated in order to obtain maximum capacity on discharge. Certain advantages however can be obtained by partially lithiating the cathode prior to battery fabrication. Common commercial cathode materials include manganese oxide compounds. As taught in the Hitachi Maxell KK, Japanese patent publication 59-31182 (1984), discharge performance and shelf stability of a non-aqueous Li|$MnO_2$ primary cell can be improved by partial lithiation of the $MnO_2$ cathode followed by appropriate heat treatment. This was accomplished by soaking the $MnO_2$ in LiOH solution and then heat treating preferably around 300°C. The $MnO_2$ contains significant amounts of bound water which is driven off by heating. In this publication, it is stated that the presence of lithium in the host $MnO_2$ prevents undesirable changes on heating.

The prior art contains other references teaching similar ways of lithiating manganese oxides for use in batteries. Sanyo, Japanese Kokai 62-108455 (1987) disclose a secondary battery employing a cathode of lithium doped gamma phase electrolytic manganese dioxide made in the same general way described in the Hitachi '182 publication. Toshiba, Japanese Kokai 62-126556 (1987) describe batteries made with cathode material prepared from LiOH treated $MnO_2$. Moli, U.S. patent 4,959,282, describe the preparation of what was called "X-phase" cathode material for batteries where the lithiated manganese oxide is first coated with LiOH solid via evaporation from solution followed by a heat treatment step. In all the preceding examples, only partial lithiation of the manganese compound is performed.

Recent developments in the field have led to the commercialization of rechargeable lithium batteries where a host compound, usually a form of carbon, has been used in place of lithium metal and/or alloy as the anode. During use of the battery, lithium ions are shuttled or rocked from the cathode to the anode on charge and from the anode to the cathode on discharge. Such batteries are called Lithium ion cells (T.Nagaura and K.Tozawa, Progress in Batteries and Solar Cells, 9, 209, (1990)) or Rocking Chair cells (J.R.Dahn, et al., J.Electrochem. Soc. 138, 2207 (1991)) Such batteries provide increased safety and cycle life over historical rechargeable lithium technologies.

It is desirable for practical reasons that the battery components be relatively stable in dry air for manufacturing purposes. It is also desirable that substantial amounts of lithium be incorporated in the electrode materials such that use of the inherent capacity of the materials can be maximized without having to add lithium in some other form. Lithium atoms therefore usually reside in the transition metal chalcogenide cathode when the cathode is fabricated, since the preferred cathodes compounds can incorporate large amounts of lithium yet still remain stable in dry air.

Sony Energy Tec Inc. was the first company to commercialize lithium ion batteries where $LiCoO_2$ was used as a cathode material. Many other such materials have been proposed such as $LiNiO_2$ (Goodenough et al., U.S.P. No. 4,302,518 and/or Dahn et al., J.Electrochem. Soc. 138, 2207,(1991)) $LiMn_2O_4$ (Ohzuku et al., J.Electrochem. Soc. 137, 769, (1990)) and $Li_2Mn_2O_4$ (Tarascon et al., J. Electrochem. 138, 2864 (1991)). $LiCoO_2$ and $LiNiO_2$ adopt a layered structure of space group R-3m. $LiMn_2O_4$ adopts the $AB_2O_4$ spinel structure with space group Fd3m. $Li_2Mn_2O_4$ as described in Tarascon et al., J. Electrochem. 138, 2864 (1991) is related to $LiMn_2O_4$ in structure, but it is not believed to be entirely air stable. It is our belief that said $LiMn_2O_4$ is hence not useful as a practical cathode material for Lithium ion batteries.

Each of these cathode materials can reversibly react with a certain amount of lithium between reasonable cutoff voltages that might be used in a practical Lithium-ion cell. These cutoff voltages are most likely about 2.5V and about 4.2V versus metallic Li. The specific capacities of $LiCoO_2$, $LiNiO_2$ and $LiMn_2O_4$ between these voltage limits are about 140 mAh/g (J.N. Reimers and J.R. Dahn, J. Electrochem. Soc. 139, 2091 (1992)), 170 mAh/g, (J.R. Dahn, U. von Sacken and C.A. Michael, Solid State Ionics 44, 87 (1990)), and 110 mAh/g (T.Ohzuku, M.Kitagawa and T. Hirai, J. Electrochem. Soc. 137, 769, (1990)).

Recently, Ohzuku et al, Chemistry Express, 7, 193 (1992), discovered a new type of $LiMnO_2$ prepared from LiOH • $H_2O$ and γ-MnOOH at low temperature. Ohzuku et al. mixed stoichiometric amounts of the above reactants and then pressed them into a pellet. Different pellets were then heated in flowing nitrogen for several hours at temperatures between 300°C and 1000°C to prepare a series of materials. For materials prepared at 1000°C, the powder diffraction pattern resembled that of orthorhombic $LiMnO_2$, (Dittrich and Hoppe, Z. Anorg. Allg. Chemie 368, 262 (1969)). At lower temperature, (eg. 450°C) the patterns were different, consisting of Bragg peaks that could be assigned to $LiMnO_2$ (of which some were very broad) and other peaks from an impurity phase. Nevertheless, Ohzuku et. al showed that material prepared at moderate temperature (between 300°C and 450°C apparently) reversibly reacted with about 190 mAh/gram of lithium between 2.0 and 4.25 V when operated as a lithium-ion cell cathode would be. In this application we call the material prepared at temperatures below 450°C, (excluding the impurity phase) Low Temperature $LiMnO_2$ or LT-$LiMnO_2$.

Cobalt and nickel are both much more expensive than manganese. For this reason, it is very important to use manganese-based materials in a price sensitive battery product provided performance penalties compared to cobalt and nickel are not overly severe. The new material reported by Ohzuku et al. apparently represents a major improvement in specific capacity compared to $LiMn_2O_4$. However, $LiMn_2O_4$ delivers useable capacity at a higher voltage than LT-$LiMnO_2$. Thus both materials appear very attractive for use as lithium ion battery cathodes.

Low cost, simple synthesis methods for such manganese based compounds are therefore desirable. Acta Chemica Sinica, Vol 39, No. 8, page 711-716 discusses an ion exchange material, $LiMn_2O_4$, resulting from treatment of electrolytic $MnO_2$ in LiOH solution followed by a heating stage. The preparation of $LiMn_2O_4$ is also disclosed in U.S. Patent No. 4,246,253 using a method involving sintering lithium carbonate and manganese dioxide at temperatures of 800°-900°C. It was shown in U.S. Patent No. 4,828,834 that a preferred $LiMn_2O_4$ compound for use in rechargeable batteries could be prepared by reacting manganese dioxide with $Li_2CO_3$ at 400°C or with LiI at 300°C in nitrogen. Ohzuku et al. proposed a method for preparing LT-$LiMnO_2$ which involves pelletizing an intimate mixture containing $LiOH \cdot H_2O$ and heat treating. In all these cases, manganese compounds with substantial amounts of lithium were prepared. However in all cases, an intimate mixture of lithium salt and manganese oxide must be created prior to heat treatment. The actual incorporation of lithium by ion exchange into the manganese oxide disclosed in Acta Chemica Sinica is believed to be low since there are few atoms to exchange with. However, after evaporating away water from LiOH solution, a solid intimate mix of LiOH coated, partially exchanged manganese oxide would be obtained.

There are several possible problems with synthesis methods employing such solid state reactions of intimate mixes of solids. In order to make uniformly lithiated material it is important that the stoichiometry throughout is constant. A uniform reaction relies on the correct ratios of reactants being present on a local, small scale. Thus, uniformity of the reactant mix must be achieved on a very small scale. Purity problems can arise if the manganese compound is inadequately lithiated prior to heating fully, resulting in the formation of an undesired compound. Unreacted lithium salt can remain as an impurity. In some instances, the preferred Li salt reactant may be LiOH. However, this can readily convert to $Li_2CO_3$ in air. Thus exposure of the mixture to the normal atmosphere prior to finishing heat treatment may be undesirable. A method of dealing with this particular problem is disclosed in Japanese Kokai 04-115459, wherein $Li_2CO_3$ is converted to LiOH by introducing water vapour into the process air stream.

According to one aspect of the present invention, there is provided a method of preparing a solid solution of the empirical formula

$$B_yMO_z \tag{I}$$

wherein B represents an element selected from Li, Na, K, Rb, Cs, Mg and Ca, y is a number in the range from greater than 0.5 to about 2, and z is a number in the range from about 1.5 to about 3, and M is a transition element selected from Mn, Fe, Ni, Co, V, Cr and Sc which comprises:

(a) selecting a water insoluble starting substance which is a solid solution of the empirical formula:

$$H_{y'}MO_2 \tag{II}$$

and an amount of a water soluble salt of B providing in excess of y' moles of B, wherein B is as defined above and y' is a number in the range from about 1 to about 2 and z is a number in the range from about 1.5 to about 3 and may be the same as or different from the value of z in $B_yMO_z$;
(b) preparing a mixture of the starting substance, the salt and water;
(c) subjecting the mixture to a first temperature above about 0°C and below about 300°C whereby the element H in the starting substance is at least partially ion exchanged with the element B to produce an intermediate solid solution of empirical formula

$$H_{y'-y}B_yMO_z \tag{III}$$

having essentially the structure of said starting substance $H_{y'}MO_z$, with y≤y' and the value of z being the same as that for z in $H_{y'}MO_z$;
(d) separating said intermediate solid solution $H_{y'-y}B_yMO_z$ from water which is present and residual salt of B, and
(e) drying said intermediate solid solution to remove most of the remaining hydrogen and produce said solid solution (I) essentially free from hydrogen.

This invention is applicable to the production of a variety of transition element-containing solid solutions of the aforesaid general formula $B_yMO_z$. In preferred practice, y in this final product is to be in the range of from greater than 1 to about 2.

When carrying out the method of this invention, it is preferred first to combine water and the salt of B so as to utilise an aqueous salt solution in admixture with the solid solution starting substance. Use of an aqueous solution lends itself to such heating methods as boiling under reflux whereby the first temperature is approximately equal to the boiling point of the aqueous solution.

At the end of the preparative steps, a separation is effected which may depend upon the working procedure adopted and may be selected from centrifuging, filtering or rinsing. The separating may additionally comprise drying at a second temperature which is below about 350°C.

The formula for the solid solution starting substance allows for a number of empirical formulae of the solid solution starting substance to be adopted. Typically the solid solution starting substance has the molecular formula $HMO_2$ or $H_2MO_2$, the choice of starting molecular formula depending, naturally, on the transition metal M. In preferred practice M is manganese and the starting solid solution is then typically selected from the group consisting of $\alpha$-MnOOH, $\beta$-MnOOH, $\gamma$-MnOOH and $Mn(OH)_2$.

Moreover, B is preferably lithium, with the salt of B utilised preferably being lithium hydroxide. The preferred combination of starting materials is $\gamma$-MnOOH as solid solution and element B as lithium preferably in the form of lithium hydroxide. By use of these preferred starting materials, it is possible to prepare LT-LiMnO$_2$, as will be described hereinafter. Here x is about zero and y is about 1.

By appropriate selection of other starting materials and operating conditions, different solid solutions of formula

$$B_yMO_z$$

may be produced. The solid solution prepared by the method of the invention can be heated subsequently to complete the synthesis of a desired material. Thus a solid solution of spinel $LiMn_2O_4$ may be prepared by a method comprising preparing a solid solution of $H_{y'-y}Li_yMnO_z$ wherein z is about 2 and y and y' are as generally defined herein and the starting solid solution is $\gamma$-MnOOH, and after carrying out the separation, heating the solid solution $H_xLi_yMnO_z$ at a second temperature which is above about 350°C to achieve structural rearrangement of the intermediate solid solution to a spinel structure.

The method of this invention enables there to be produced solid solutions which can be used in primary or rechargeable batteries wherein at least a portion of one electrode comprises a solid solution material prepared according to the method of the invention. In particular, the inventors have discovered that $LiMn_2O_4$ and LT-LiMnO$_2$ can be prepared in appreciably pure form using a simple two stage process embodying the invention. The first stage of the process, the lithiation stage, is accomplished via low temperature ion exchange in aqueous warm salt solution. The second stage involves a heat treatment step for the removal of hydrogen as water and/or for structural rearrangement. A key to such process is the use of a suitable starting material with the proper initial structure and sufficient inserted ion already present such that it can be exchanged with the total amount of lithium desired in the final compound. The other key is that the exchange process requires a solvent, in this case water. Thus no intimate mix of solid Li salt and manganese compound is required as an intermediate step with its corresponding drawbacks. Since other chemically similar starting materials are known to exist, the inventors expect that this method will be applicable to the synthesis of other solid solution materials, especially other Li manganese oxide phases, of interest for use in batteries as well.

Specifically, both LT-LiMnO$_2$ and $LiMn_2O_4$ have been synthesized using this novel process and using $\gamma$-MnOOH as the solid solution starting material. Lithiation was accomplished by boiling solid $\gamma$-MnOOH particles in sufficient 4M LiOH solution. During the boiling, an ion exchange reaction occurs:

$$\gamma\text{-MnOOH} + \text{LiOH} \rightarrow \text{LT-Li}_x\text{H}_{1-x}\text{MnO}_2 + \text{H}_2\text{O}$$

The initial molarity and volume of the LiOH solution which is added per unit mass of $\gamma$-MnOOH can be used to adjust the extent of lithiation and to minimize the amount of LiOH which remains in the solution after reaction. Predominantly complete ion exchange is possible. After sufficient time, the suspended LT-Li$_x$H$_{1-x}$MnO$_2$ particles are recovered from the solution by filtering or settling or centrifugation. The material can then either be rinsed with pure $H_2O$ to remove excess LiOH, if any, or left unrinsed. Some reverse ion exchange can occur if rinsing is used. This can be used to adjust the extent of lithiation if desired. The powder is then dried by heating at temperatures between 100°C and 350°C in either vacuum or inert gas. Heating above 350°C may be used if structural rearrangement is desired. This represents a substantial simplification compared to the method of Ohzuku et al. in the preparation of LT-LiMnO$_2$.

In the preparation of LT-LiMnO$_2$, it is thought to be important that the ion exchange reactions be completed at temperatures below about 220°C. The reason is that $\gamma$-MnOOH decomposes above this temperature to form $Mn_2O_3$ and water. For rapid ion exchange reactions, involving the $\gamma$-MnOOH framework, it is essential that this framework not be destroyed. Therefore it is most desirable to perform these ion exchange reactions below about 220°C.

Lithium/LT-LiMnO$_2$ test cells constructed with such materials give reversible capacities between 2.5 and 4.2 V of more than 170 mAh/g. Once the powders are heated to 450°C or above, the reversible cell capacity drops dramatically (to about 60 mAh/g for material heated at 450°C). This reduction coincides with changes to the x-ray diffraction profile of the material with heating. Between 350°C and 450°C, the crystallinity of LT-LiMnO$_2$ improves dramatically, apparently reducing the reversible capacity.

In the description which follows, reference will be made to the following examples, wherein:

Figure 1 shows a preferred construction of a rechargeable lithium ion battery incorporating a cathode material prepared using the invention process.

Figure 2 shows the construction of the laboratory test cell employed to illustrate the electrochemical behaviour of example materials.

Figure 3 shows the powder X-ray diffraction pattern of LT-LiMnO$_2$ prepared in comparative example 1.

Figure 4 shows the voltage versus capacity curves for a laboratory test cell using a lithium anode and a cathode of the material prepared in comparative example 1.

Figure 5 shows the voltage versus capacity curve for a laboratory test cell using a lithium anode and a cathode of the material used in comparative example 2 plus the curve of figure 4 for comparison.

Figure 6 shows the powder X-ray diffraction pattern of LT-LiMnO$_2$ prepared in invention example 1.

Figure 7 shows the voltage versus capacity curves for a laboratory test cell using a lithium anode and a cathode of the material prepared in invention example 1.

Figure 8 shows the powder X-ray diffraction pattern of LT-Li$_x$MnO$_2$ prepared in invention example 2.

Figure 9 shows the voltage versus capacity curves for a laboratory test cell using a lithium anode and a cathode of the material prepared in invention example 2.

Figure 10 shows the powder X-ray diffraction pattern of LiMn$_2$O$_4$ prepared in invention example 3.

Figure 11 shows the thermogravimetric data for foil wrapped pellets tested at different heating rates in illustrative example 1.

Figure 12 shows the thermogravimetric data for foil wrapped pellets prepared with anhydrous LiOH or LiOH.H$_2$O in illustrative example 1.

Figure 13 shows the thermogravimetric data for $\gamma$-MnOOH by itself as tested in illustrative example 1.

Figure 14 shows the powder X-ray diffraction pattern of LT-Li$_x$MnO$_2$ prepared in illustrative example 2.

Figure 15 shows the voltage versus capacity curves for a laboratory test cell using a lithium anode and a cathode of the material prepared in illustrative example 2.

Figure 16 shows the thermogravimetric data for the material prepared as in illustrative example 3.

Figure 17 shows the powder X-ray diffraction pattern of the mixture of phases prepared in illustrative example 4.

In the following, the target solid solution materials containing a uniformly dispersed mixture of one or more solid substances at the ionic level are normally referred to as B$_y$MO$_z$, where y, and z refer to the ranges of elements B, and O present with respect to the element M which, for the purposes of the description hereinafter includes within its meaning Mn unless otherwise indicated. Valence restrictions limit the theoretical ranges possible for these parameters. A person skilled in the art will understand the interdependence of the absolute ranges possible for these parameters. Also in the following, the term low temperature is used to mean above 0°C and below 300°C to distinguish it clearly from the prior art.

Ion exchange is defined by Grimshaw and Harland, ("Ion Exchange: Introduction to Theory and Practice" published by : The Chemical Society, London, England, 1975), as "the reversible interchange of ions between a solid phase (the ion-exchanger) and a solution phase; the ion-exchanger is usually insoluble in the medium in which the ion exchange is carried out". If an ion exchanger $M^- A^+$ carrying $A^+$ cations is placed in an aqueous solution containing $B^+$, an ion exchange reaction takes place represented by the following equation: $M^-A^+$ (solid)+ $B^+$ (solution) $\leftrightarrow$ $M^-B^+$ (solid)+ $A^+$ (solution).

The anion in solution usually does not take part in the exchange to any appreciate extent. In the examples of this invention, M can be identified specifically with MnOO, A with H, and B with Li.

Ion exchange reactions are generally topotactic. Is this relatively gentle reaction, the structure of the framework is retained while mobile ions of one type ($H^+$ in the examples to follow) are exchanged for those in high concentration in solution ($Li^+$ in the examples). Therefore, one can expect the structure of the ion exchanged product to mirror that of the starting reactant. MnOOH exists in three well documented forms. There is the $\gamma$-MnOOH form used here, called manganite, described in M.J. Buerger, Zeitschrift fur Kristallographie 95, 163 (1936), and in D.Glover, B. Schumm, Jr. and A. Kozawa, "Handbook of Manganese Dioxides, Battery Grade" Published by the International Battery Materials Association (1989) page 6, which shows structural similarity to orthorhombic $LiMnO_2$. There is $\alpha$-MnOOH, called groutite, and $\beta$-MnOOH called Feitknechtite (D.Glover, B. Schumm, Jr. and A. Kozawa, "Handbook of Manganese Dioxides, Battery Grade" Published by the International Battery Materials Association (1989) page 6, and/or Owen Bricker, The American Mineralogist, 50, 1296 (1965). The former takes a ramsdellite-type structure and the latter is apparently a layered structure like $Mn(OH)_2$. The inventors expect the synthesis methods to be applicable to each of these MnOOH starting materials and that useful materials as cathodes in Li-ion cells will be produced. Furthermore, it is likely that $Mn(OH)_2$ can also be ion-exchanged using our methods, again producing useful electrode materials for Li-ion cells. A summary of present and expected results is shown in the following table.

| Starting Materials | $\alpha$-MnOOH | $\beta$-MnOOH | $\gamma$-MnOOH | $Mn(OH)_2$ |
|---|---|---|---|---|
| Common Name | Groutite | Feitknechtite | Manganite | Manganese Hydroxide |
| Structure Type | Ramsdellite | Layered | Manganite | $Cd(OH)_2$ Type |
| After Ion Exchange | ? (X-phase Type) | ? | LT-$Li_xH_{1-x}MnO_2$ | ? ($Li_2NiO_2$-Type) |
| After Heating Becomes | ? | ? | LT-$LiMnO_2$, for x>0.9 $LiMn_2O_4$, for x≈0.5 | ? |

Lithium manganese oxide is prepared using a two-stage process. $\gamma$-MnOOH obtained from Chemetals (Baltimore, Md., USA) and $LiOH.H_2O$ obtained from FMC (Bessemer City, NC., USA) were used as reactants. Lithiation was accomplished by stirring $\gamma$-MnOOH in aqueous LiOH solution at about 100°C in a refluxing set-up. A variety of post-lithiation separation treatments to dry the powder can be employed and include filtering, settling and centrifuging in addition to heating. Heating is performed in tube furnaces equipped with stainless steel furnace tubes above 120°C. The ends of the furnace tubes could be closed by flanges with gas flow or vacuum fittings so that heating could be done under air, inert gas, or vacuum.

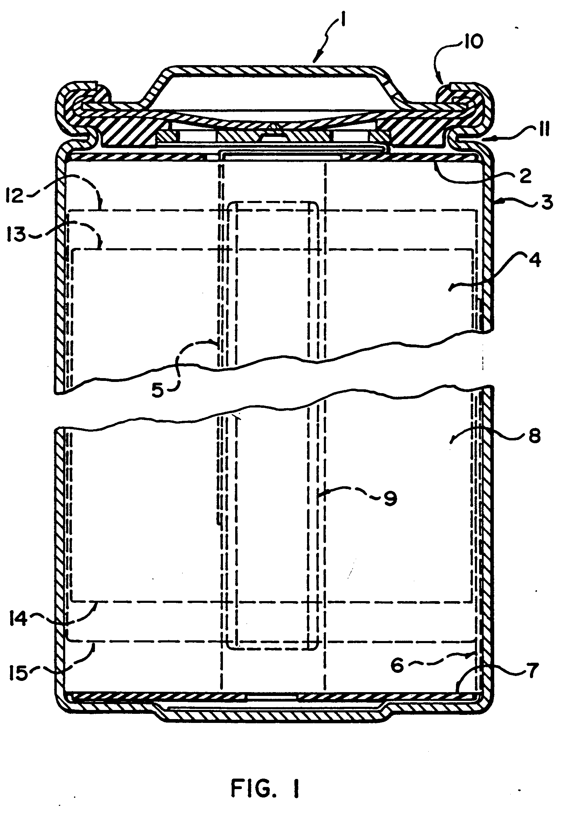

Primary or rechargeable lithium batteries are then constructed employing the lithium manganese oxide material as a cathode material (either as the major component or as an additive). A preferred construction is that of a wound type Li ion rechargeable battery shown in Figure 1. Cathode foils are prepared using lithium manganese oxide powder, a binder, and a conductive dilutant mixture applied to a thin aluminum foil. Anode foils are prepared using suitable carbonaceous compound mixtures and a binder applied to a thin copper foil. A dry cell assembly 4 is then prepared by spirally winding an anode and cathode segment together into a "jelly roll" with two microporous polyolefin film sheets acting as separators. Typically, anode foils are slightly wider than the cathodes as indicated by anode edges 12, 15 and cathode edges 13, 14 in Figure 1. The "jelly roll" is inserted into conventional cylindrical battery containers 3. Appropriate insulating pieces 2,7 are included and tab connections 5,6 are made to the cell case 3 and header 1. Safety devices may be included as desired. Figure 1 shows the use of a combination safety vent and pressure operated disconnect device (in the header 1) that may be employed. Electrolyte 8 consisting of a suitable lithium salt in a mixture of non-aqueous solvents is added to activate the battery prior to crimping the header-case assembly shut.

For illustrative and/or comparative purposes, other lithium manganese oxide samples were synthesized in the examples to follow using the same reactants and a conventional synthesis method. Pellets of mixed $LiOH \cdot H_2O$ and $\gamma$-MnOOH powders were made using a hardened steel pellet press operated with a pressure on the powders of about 1000 bar. A Retsch Model RM-0 automatic grinder was used to thoroughly mix the reactants. Heating of the pellets was performed using the same apparatus and methods employed in the invention process.

In the examples to follow, a Phillips powder diffractometer equipped with a Copper target x-ray tube and a diffracted beam monochrometer was used for diffraction measurements. A TA instruments Model 951 thermogravimetric analyzer was used when monitoring the reaction between LiOH · $H_2O$ and γ-MnOOH solids.

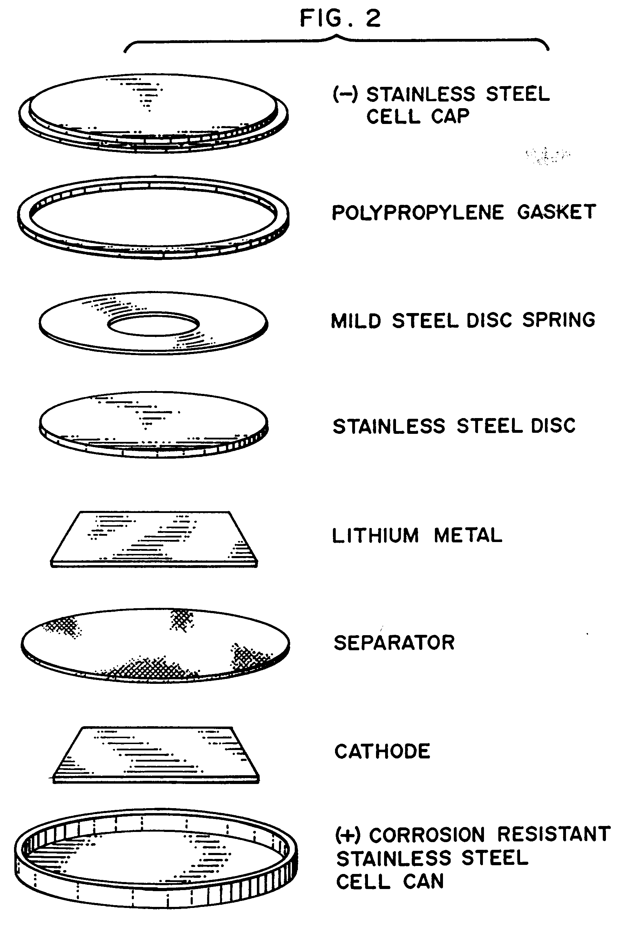

Laboratory test cells were employed to illustrate the electrochemical behaviour of the lithium manganese oxide cathode materials that were prepared. These cells used an anode of lithium metal which acts as a useful reference electrode for this purpose. The information provided from such cells allows those skilled in the art to engineer suitable lithium ion batteries with these materials as cathodes. The laboratory test cells were constructed as shown in Figure 2. 2325 size coin cell hardware, comprising negative container 21, gasket 22, and positive container 30, equipped with a spacer plate 24 (304 stainless steel) and a disc spring 23 (mild steel) was used as the test vehicle. A special corrosion resistant grade of stainless steel was used for the positive container hardware 30 to prevent oxidation. The disc spring 23 was selected so that a pressure of about 15 bar would be applied to each of the cell electrodes (anode 25 and cathode 27) when the cell was crimped closed. 125μm thick Li foil was used as the anode 25 in these cells. The separator 26 was Celgard$_{TM}$ 2502 microporous film which had been wetted with electrolyte 28 consisting of 1M LiPF$_6$ dissolved in a 50/25/25 volume percent mixture of Dimethyl Carbonate, Propylene Carbonate and Ethylene Carbonate respectively. Cathodes 27 were made from the lithiated manganese oxide powder, Super S carbon black (10% by weight) and polyvinylidene (PVDF) binder, uniformly coated on aluminum foil. The lithiated manganese oxide and the carbon black were added to a solution of 20% PVDF in N-methylpyrollidinone (NMP) such that 10% of the final electrode mass would be PVDF. Excess NMP was then added until the slurry reached a smooth syrupy viscosity. The slurry was then spread on the Al foil using a doctor blade spreader and the NMP evaporated at about 90°C in air. Once the electrode stock was dried it was compressed between flat plates at about 25 bar pressure. Test electrodes of dimension 1.2cm x 1.2cm were then cut from the electrode stock using a precision cutting jig. These electrodes were then weighed and the weight of the foil, the PVDF and the carbon black were subtracted to obtain the active electrode mass.

All cell construction and sealing was done in an Argon-filled glove box. After construction, the cells were removed from the glove box and cycle tested using constant current cyclers. Currents were adjusted to be 5.7 mAh/gram of active material.

Comparative Examples

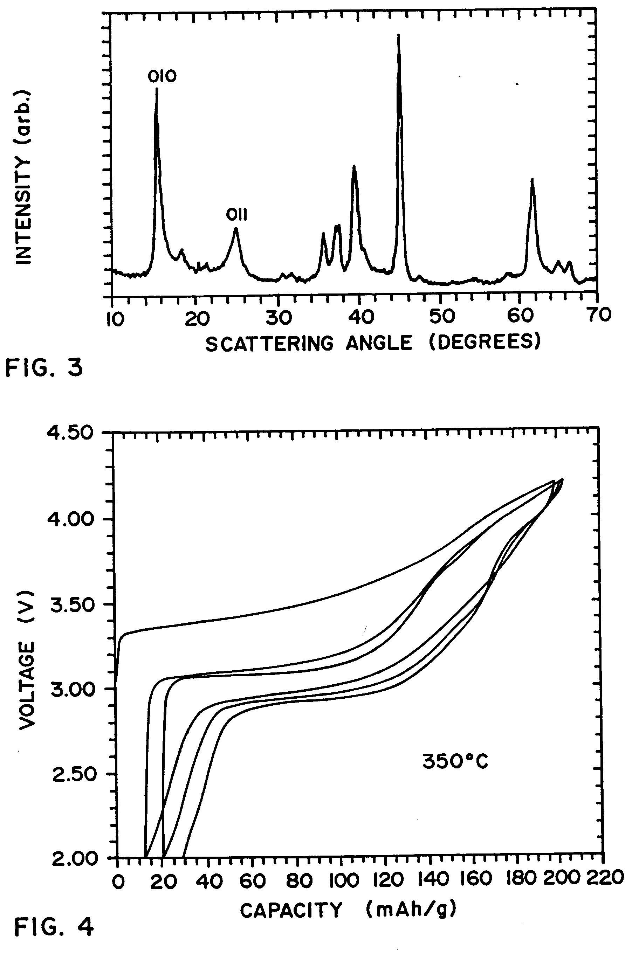

Example 1: 6.554g γ-MnOOH and 3.445g LiOH · $H_2O$ were thoroughly mixed together using the automatic grinder. A 10% atomic stoichiometric excess of Li was included, ie: the Li:Mn ratio in the mixture was 1.1:1. After mixing, the powders were pressed into a pellet at 1000 bar pressure. The pellet was then tightly wrapped in Ni foil. The wrapped pellet was placed in an alumina boat and then heated under flowing argon for 18 hours at 350°C. After heating it was reduced to powder by grinding and analyzed by x-ray diffraction. Figure 3 shows the diffraction pattern obtained. This pattern agrees well with that of similar material prepared by T. Ohzuku et al.,J. Electrochem. Soc. 137, 769, (1990). (shown in this article's Figure 1) except that, in their work, the impurity peak near 18°, belonging to the pattern for LiMn$_2$O$_4$, is of equal height to the 011 peak at 24.5°. (Note that the data in this reference was collected using Fe Kα radiation, so the angles there must be corrected to correspond to those for Cu Kα. This is done using standard methods (B.D. Cullity, "X-Ray Diffraction", Addison-Wesley, 1969). Table 1 gives the Bragg Peak positions and integrated peak intensities for LiMnO$_2$ as prepared at about 1000°C (Dittrich and Hoppe, Z. Anorg. Allg. Chemie 368, 262 (1969)). Although LiMnO$_2$ prepared at this temperature is not electrochemically equivalent to compounds of similar stoichiometry prepared at lower temperatures, the x-ray patterns are similar enough for purposes of identifying impurity related peaks in the patterns. From a comparison of Figure 3, Table 1 and said reference, it is clear that the material prepared by the invention methods is more pure than that of said Ohzuku et al. reference.

TABLE 1

| LITERATURE DIFFRACTION PATTERN FOR LiMnO$_2$ | | |
|---|---|---|
| MILLER INDICES | SCATTERING ANGLE | RELATIVE INTENSITY |
| 010 | 15.264 | 50 |
| 011 | 24.571 | 56 |
| 110 | 35.408 | 23 |
| 021 | 36.742 | 18 |
| 101 | 37.360 | 12 |

TABLE 1 (continued)

| LITERATURE DIFFRACTION PATTERN FOR $LiMnO_2$ | | |
|---|---|---|
| MILLER INDICES | SCATTERING ANGLE | RELATIVE INTENSITY |
| 002 | 39.169 | 75 |
| 111 | 40.605 | 39 |
| 012 | 42.401 | 20 |
| 120 | 44.902 | 100 |
| 030 | 47.227 | 7 |
| 102 | 51.501 | 8 |
| 112 | 53.989 | 17 |
| 130 | 58.113 | 18 |
| 122 | 61.344 | 95 |
| 131 | 62.027 | 29 |
| 032 | 63.106 | 10 |
| 040 | 64.777 | 20 |
| 200 | 66.708 | 21 |
| 210 | 68.881 | 11 |

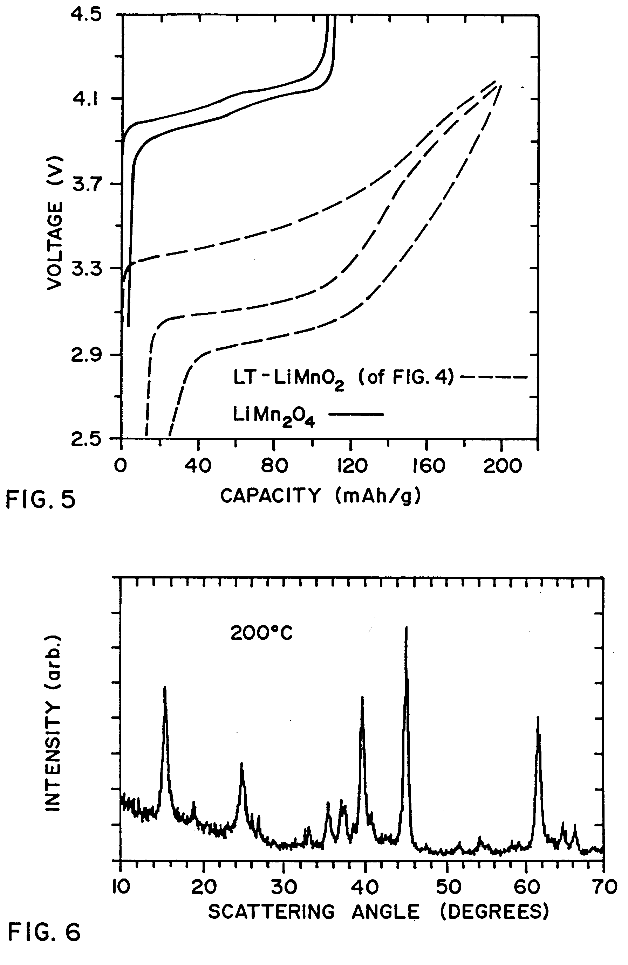

A $Li/LT$-$LiMnO_2$ test cell was assembled from this powder. The cell was charged and discharged using currents of 5.7 mA/g. The cell voltage versus capacity for the first three cycles is shown in Figure 4. The specific reversible capacity for this cell over the first three cycles is greater than 170 mAh/g between 2.0 and 4.2 V. Other similar cells obtained equal or better performance. This performance is equal to that shown in said reference (Figure 2 in this reference). Similar cells cycled between 2.0 and 3.8 V at the same specific current obtained 120 mAh/g of reversible capacity for over 30 charge discharge cycles.

Example 2: X-ray pattern information for $LiMn_2O_4$ was obtained from the literature (Natl. Bureau of Standards (U.S.) Monograph 25, 2178, (1984) and Joint Commission on Powder Diffraction Standards (JCPDS) reference database. Peak positions and relative intensity are shown in Table 2.

TABLE 2

| LITERATURE DIFFRACTION PATTERN FOR $LiMn_2O_4$ | | |
|---|---|---|
| MILLER INDICES | SCATTERING ANGLE | RELATIVE INTENSITY |
| 111 | 18.611 | 100 |
| 220 | 30.650 | 1 |
| 311 | 36.085 | 38 |
| 222 | 37.747 | 10 |
| 400 | 43.869 | 33 |
| 331 | 48.047 | 7 |
| 511 | 58.056 | 10 |
| 440 | 63.780 | 16 |
| 531 | 67.079 | 7 |

A $Li/LiMn_2O_4$ test cell was prepared using $LiMn_2O_4$ (from Cyprus-Foote Mineral Corp., Exton, PA., USA) and the methods described earlier. Figure 5 shows the voltage-capacity relation for this cell compared to that used for Figure 4. The data for the $LiMn_2O_4$ cell are in good agreement with those in the literature (T. Ohzuku et al., J. Electrochem. Soc.

137, 769, (1990). This shows the capacity advantage of LT-LiMnO$_2$ over LiMn$_2$O$_4$.

These two examples illustrate the electrochemical behaviour of LT-LiMnO$_2$ and LiMn$_2$O$_4$, that prior art methods can be successfully duplicated, and that the laboratory cell assembly and testing techniques are sound.

Invention Examples

Example 1: 5.0 grams of $\gamma$-MnOOH were refluxed under boiling conditions in 100 mls of 4M LiOH solution for 6 hours. Some of the suspension was poured into a centrifuge tube and settled by centrifugation. The liquid was then decanted, leaving minimal residual salt solution behind, and the resulting wet powder directly heated in an alumina boat to 200°C in flowing argon. Figure 6 shows the x-ray diffraction pattern for this material showing that it is basically identical in a structural sense to the materials shown in comparative example 1, even though it has been prepared under strikingly different conditions.

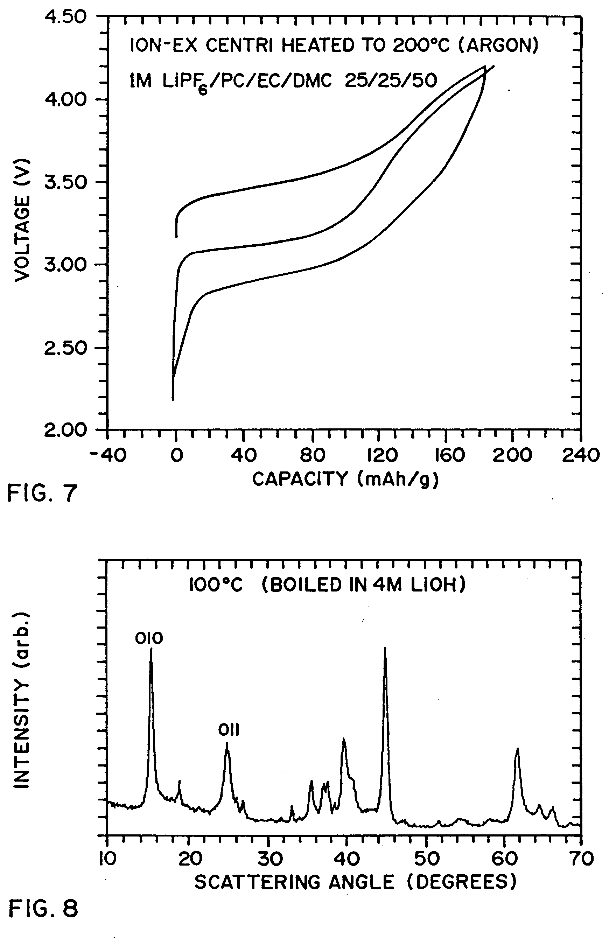

A Li/LiMnO$_2$ test cell was prepared from this material. Figure 7 shows the voltage-capacity relation for this cell, which obtains 180 mAh/g between 4.2 and 2.0 V.

This example demonstrates that excellent LT-LiMnO$_2$ material for use as cathodes in lithium batteries can be made using the invention process. Material similar to that described in the prior art can be prepared at temperatures as low as 200°C.

Example 2: 3.0 grams of $\gamma$-MnOOH was added to 100 mls of 4M LiOH solution. The mixture was refluxed by boiling for 6 hours. The solids were collected by filtering, and rinsed in water several times. The resulting powder was dried at 120°C in vacuum. Figure 8 shows the diffraction pattern for this sample. A comparison with Figure 3 shows that a structurally identical product (apart from small impurity peaks near 18.7, 26, 26.9, 33.1 and 38.6 degrees) has been prepared.

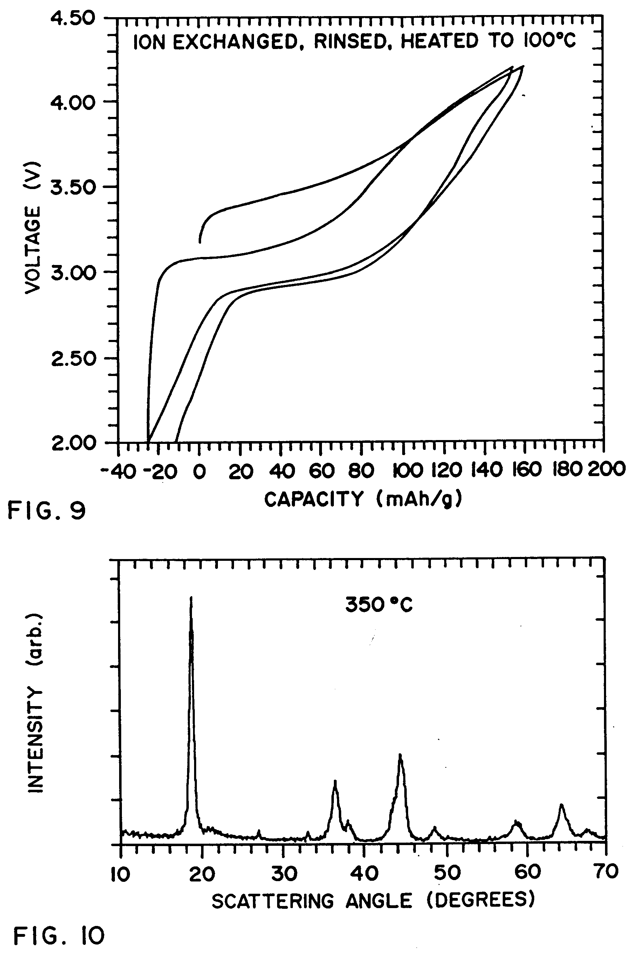

A Li/LiMnO$_2$ test cell was prepared using this material. Figure 9 shows the voltage-capacity relation for this cell. This cell obtains 190 mAh/g between 4.2 and 2.0 V after the first charge in good agreement with the cells described in comparative example 1. However, the capacity of the first charge is only about 160 mAh/g showing that insufficient Li has been incorporated in the material by the ion exchange followed by rinsing in water. Some Li was removed by "reverse ion-exchange" with hydrogen during the rinsing steps. Therefore, this material must be considered Li$_x$H$_{1-x}$MnO$_2$ with x near 0.88 after this rinsing.

This example demonstrates a means of varying the degree of lithiation while otherwise preparing the same material.

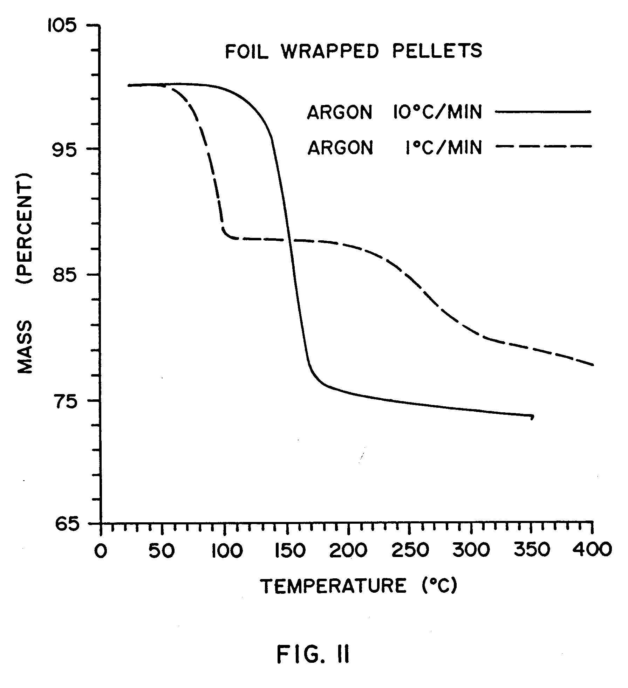

Example 3: The material of inventive example 2 was further heated to 350°C in argon for 18 hours. The diffraction pattern for this material is given in Figure 10. This pattern no longer resembles that of the LiMnO$_2$ phase prepared in comparative example 1 and inventive examples 1 and 2. Instead this pattern is close to that of LiMn$_2$O$_4$ shown in comparative example 2. Thus it is presumably possible to prepare LiMn$_2$O$_4$ and other Li-Mn-O compounds at low temperatures by preparing the "right" Li$_x$H$_{1-x}$MnO$_2$ compound by controlled ion exchange followed by a suitable heat treatment.

Illustrative Examples

Example 1: 6.554 g $\gamma$-MnOOH and 3.445 g LiOH $\cdot$ H$_2$O were thoroughly mixed together using the automatic grinder. After mixing, about 0.1 gram of the mixture was pressed together at 1000 bar as in comparative example 1. Two small pieces of pellet (about 30 mg) were broken off and wrapped in a small piece of Al foil having known weight. The wrapped pieces were then subjected to TGA analysis at two different heating rates under flowing argon. One run was @ 1°C/min and the other was @ 10°C/min.

Next, anhydrous LiOH and $\gamma$-MnOOH were mixed in a 1:1 stoichiometric ratio by grinding for 5 minutes. The mixture was pressed into a pellet at 1000 bar as before. A small piece of this pellet was wrapped in a known mass of aluminum foil and then subjected to TGA analysis under an argon atmosphere.

Figure 11 shows the weight loss versus temperature for both the TGA analyses on material prepared using LiOH $\cdot$ H$_2$O. At 10°C/min heating rate, the reaction between LiOH $\cdot$ H$_2$O and $\gamma$-MnOOH occurs in a single event beginning just over 100°C in this analysis and ending near 170°C. The water of hydration of LiOH $\cdot$ H$_2$O does not leave until over 100°C due to the foil wrapping. Thus there is water present to facilitate the ion exchange reaction to form LT-LiMnO$_2$. At 1°C/min heating rate, there is extensive weight loss before 100°C, as the water of hydration of LiOH $\cdot$ H$_2$O is lost through the cracks in the foil wrapping since the time taken to reach 100°C is ten times longer. In T. Ohzuku et al., J. Electrochem. Soc. 137, 769, (1990), foil wrapping was not specified. This omission leads to early water loss at the exterior of the pellet and then to incomplete ion exchange at low temperature.

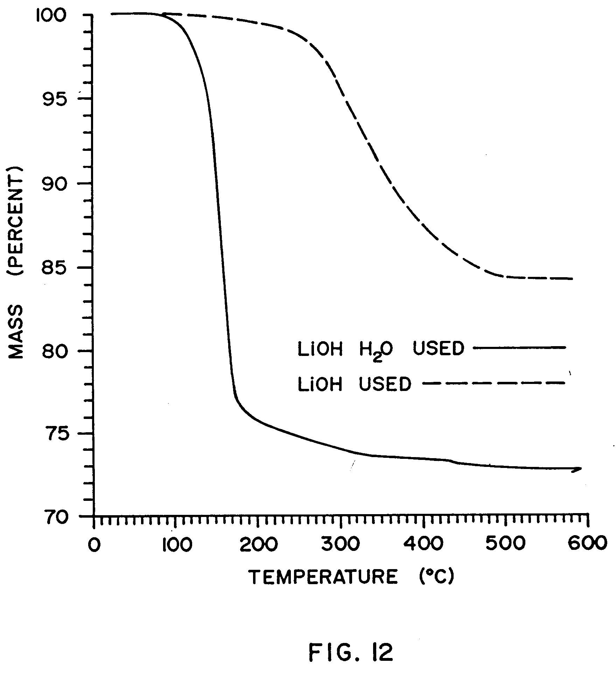

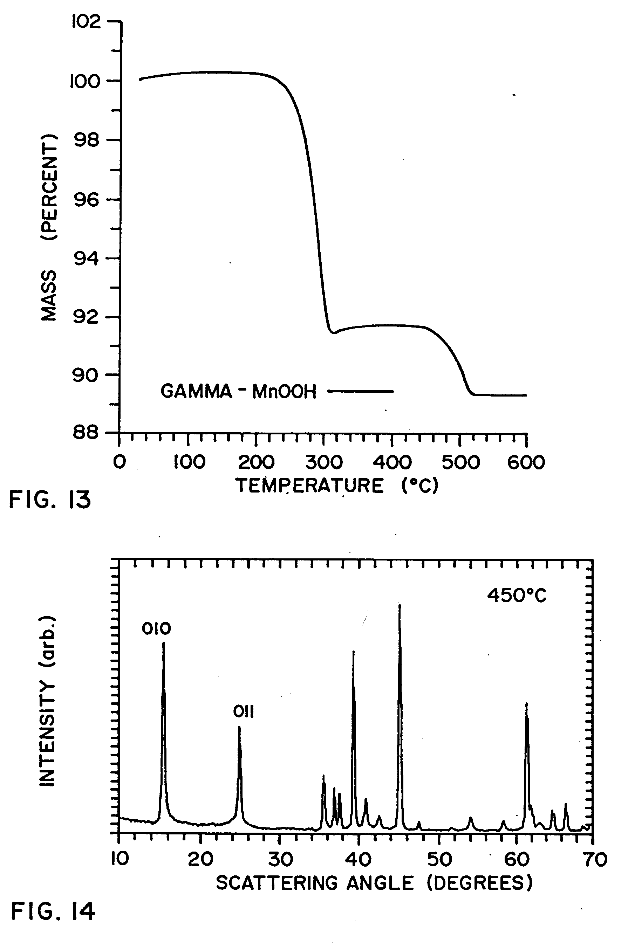

This phenomena is demonstrated further in comparing this to the results obtained with anhydrous LiOH and $\gamma$-MnOOH where the reaction doesn't begin until over 220°C. Figure 12 shows TGA analyses of the LiOH $\cdot$ H$_2$O sample and anhydrous LiOH sample both heated at 10°C/min rate. At 220°C, $\gamma$-MnOOH begins to decompose as is shown on a similar TGA analysis on $\gamma$-MnOOH by itself in Figure 13. Neither the anhydrous LiOH sample nor the 1°C/min sample

become LT-LiMnO$_2$ after heating to 350°C, because insufficient water remains in the samples to facilitate the ion exchange between Li and H before the $\gamma$-MnOOH decomposes near 220°C. Note that the expected mass loss in the reaction

$$LiOH \cdot H_2O + \gamma\text{-MnOOH} \rightarrow LiMnO_2$$

is 27.7%, consistent with the sample heated at 10°C/min. To lower reaction temperatures as much as possible and to minimize such decomposition, water must be present as the ion-exchange solvent, so that LiOH is effectively in the solution phase.

This example shows that the presence of water is a key to the invention process and also to a prior art process. LiMnO$_2$ clearly forms from a pressed pellet reaction below 200°C, if water vapour (in this case from the water of hydration of LiOH $\cdot$ H$_2$O) is present until about 100°C.

Example 2: A wrapped pellet as in comparative example 1 was prepared and heated to 450°C under argon flow for 18 hours. The diffraction pattern of the powdered product is shown in Figure 14. This agrees well with the literature pattern described in comparative example one. Notice that the width of the 011 peak near 24.7 degrees has decreased compared to the data shown in Figure 3. This is due to increased crystallinity on higher temperature heating.

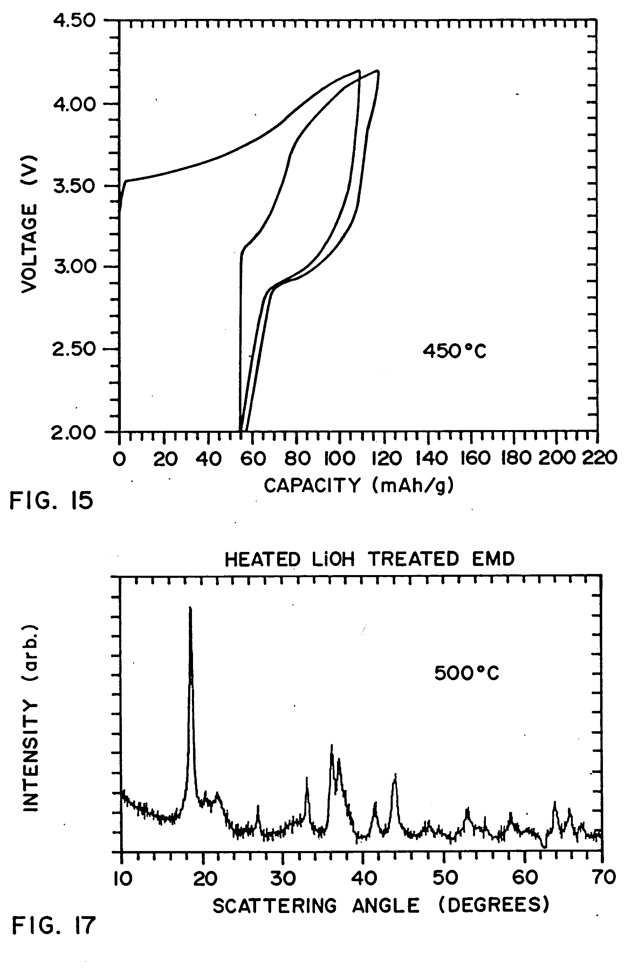

A Li/LiMnO$_2$ cell was assembled using this powder. Figure 15 shows the voltage-capacity relation for this cell. This cell obtains only about 60 mAh/g of reversible capacity between 2.0 and 4.2 V.

This example illustrates that the electrochemical properties of this lithium manganese oxide can be drastically reduced by overheating to 450°C. The correlation of broader x-ray diffraction peaks with reduced heat treatment temperature to greater electrochemical capacity is similar in general to that mentioned in USP No. 4,828,834 regarding LiMn$_2$O$_4$.

Example 3: 3.543 LiOH.H$_2$O and 6.457g $\gamma$-MnOOH were ground together to prepare an intimate mixture. From this mixture, 4.595g was extracted and pressed at 1000 bar into a 2.54cm (1") diameter pellet. The pellet was wrapped in A1 foil and heated to 200°C for 1 hour in air. The final mass of the pellet was 3.334g after heating. For a 27.7% weight loss (expected if the product is LT-LiMnO$_2$) the final mass is calculated to be 3.322g, in good agreement with experiment. The x-ray diffraction pattern of this powder resembled that shown in Figures 3, 6 and 8, showing that LT-LiMnO$_2$ was indeed produced.

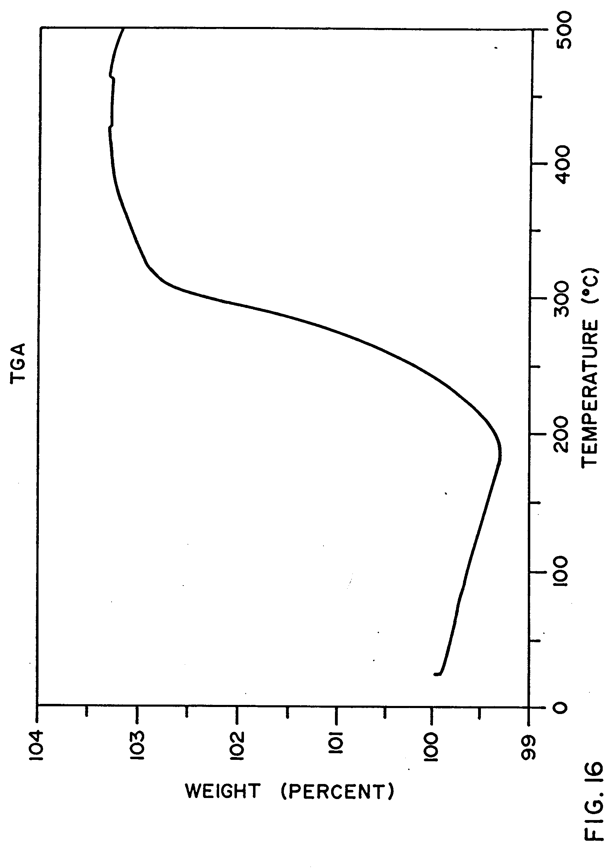

A TGA analysis of a powdered sample of the material of invention example 2 was performed in an air atmosphere. As shown in Figure 16, weight gain begins near 200°C as the reaction

$$3\ LiMnO_2 + 1/2\ (O_2) \rightarrow LiMn_2O_4 + Li_2MnO_3$$

occurs. The weight gain expected in this reaction is 5.6%, but the experiment only shows about 3%, suggesting that it has not gone fully to completion, or that another reaction has taken place. The x-ray diffraction profile of the heated product does resemble that of LiMn$_2$O$_4$ and Li$_2$MnO$_3$.

This example shows that once formed, LT-LiMnO$_2$ is stable in air to just under 200°C. Above this temperature, a vacuum or inert gas such as Argon, must be used for processing. This demonstrates the importance of the type of process gas used and that simplification is possible if low temperature processing can be used.

Example 4: 3.0 gms of electrolytic MnO$_2$ or EMD (from Mitsui, TAD I grade) was refluxed under boiling conditions in 50 mls of 4M LiOH solution for six hours. Some of the suspension was poured into a centrifuge tube and settled by centrifugation. The liquid was then decanted, leaving minimal residual salt solution behind. The resultant wet powder was then heat treated in air at 500°C for greater than two hours. According to the Acta Chemica Sinica reference mentioned previously, these are the optimum conditions for preparing the ion exchange material identified as LiMn$_2$O$_4$. Figure 17 shows the x-ray diffraction pattern of the example material. It is clearly a mixture of phases which may include some contribution from LiMn$_2$O$_4$, but is far from substantially pure.

While EMD has some bound water, it does not have a substantial amount. Consequently, EMD is often represented as MnO$_2$ only, without mention of hydrogen. Since virtually all the residual LiOH in solution was decanted away and since there is insufficient hydrogen to exchange with lithium in EMD, the material LiMn$_2$O$_4$ was not the result of the example process. The Acta Chemica Sinica reference does not disclose sufficient detail but their result can easily be explained if significant residual LiOH remained prior to heat treatment (ie: an intermediary step wherein the partially exchanged lithium MnO$_2$ compound is in intimate contact with LiOH).

This example demonstrates that the invention process differs from the prior art and that LiMn$_2$O$_4$, a compound with substantial Li content, cannot be prepared by ion exchange if the starting material does not have a substantial amount of ions with which to exchange.

While the disclosure only shows some specific materials have been prepared using this novel process, it is intended that other materials prepared in a similar manner be within the scope of this invention. A table of starting materials that could be used to prepare useful and perhaps novel materials using this process is shown in the following.

Members of said Table include a variety of transition metal oxide hydroxides that can be represented as either MOOH or M(OH)$_2$, or alternatively, as either HMO$_2$ and H$_2$MO$_2$ respectively, wherein M can be Mn, Fe, Ni, Co, V, Cr or Sc. The data for said Table has been compiled using information provided in the JCPDS-X-ray Powder Diffraction Database (1990). Some members have been synthesized artificially and have no given name. In like manner to the aforementioned examples, it is expected that H atoms in members of said Table might be exchanged for other elements via the method of the invention.

**TABLE 3**

Transition Metal Oxide Hydroxides
MOOH and M(OH)₂ Materials

| Structure\M | Sc | V | Cr | Mn | Fe | Co | Ni |
|---|---|---|---|---|---|---|---|
| Ramsdelite Orth. Pbnm | α-ScOOH | Montroseite | Bracewellite | Oroutite α-MnOOH | Goethite α-FeOOH | No Name | |
| LiNiO₂ Str. Hex. R-3m 3R Stacking | | | Grimaldiite -3R | | | Heterogenite -3R | |
| Hex. P6₃/mmc 2H stacking | | | | | Feroxyhyte * | Heterogenite -2H | |
| Hex. P3₁2 1H Stacking | | | | Pyrochroite Mn(OH)₂ | δ-FeOOH & Fe(OH)₂ | β-Co(OH)₂ | β-NiOOH ** & Theophrastite Ni(OH)₂ |
| InOOH Str. Orth. P2₁mn | No Name (ScOOH) | No Name (VOOH) | | | No Name (FeOOH) | | No Name (High Pres.) |
| Manganite Mono. P2₁/a | | | | γ-MnOOH† | | | |
| Lepidocrocite Orth. Amam | γ-ScOOH | | | | γ-FeOOH Lepidocrocite | | |
| Layered | | | | Feitnechtite β-MnOOH | | | |
| Orth. Pnnm | | | Guyanaite | | | | |
| Cryptomelane Struct. Tet. I4/m | | | | | Akaganeite | | |
| Hex. 4 or 5H stacking? | | | | | | | γ-NiOOH |

\*  distorted from ideal 2H-Heterogenite structure

\*\*  based on only 3 diffraction lines

**Claims**

1.  A method of preparing a solid solution of the empirical formula

$$B_yMO_z \qquad\qquad (I)$$

wherein B represents an element selected from Li, Na, K, Rb, Cs, Mg and Ca, y is a number in the range from greater than 0.5 to about 2, and z is a number in the range from about 1.5 to about 3, and M is a transition element selected from Mn, Fe, Ni, Co, V, Cr and Sc which comprises:

(a) selecting a water insoluble starting substance which is a solid solution of the empirical formula:

$$H_{y'}MO_z \qquad\qquad (II)$$

and an amount of a water soluble salt of B providing in excess of y' moles of B, wherein B is as defined above and y' is a number in the range from about 1 to about 2 and z is a number in the range from about 1.5 to about 3 and may be the same as or different from the value of z in $B_yMO_z$;

(b) preparing a mixture of the starting substance, the salt and water;

(c) subjecting the mixture to a first temperature above about 0°C and below about 300°C whereby the element H in the starting substance is at least partially ion exchanged with the element B to produce an intermediate solid solution of empirical formula

$$H_{y'-y}B_yMO_z \qquad\qquad (III)$$

having essentially the structure of said starting substance $H_{y'}MO_z$, with $y \leq y'$ and the value of z being the same as that for z in $H_{y'}MO_z$;

(d) separating said intermediate solid solution $H_{y'-y}B_yMO_z$ from water which is present and residual salt of B, and

(e) drying said intermediate solid solution to remove most of the remaining hydrogen and produce said solid solution (I) essentially free from hydrogen.

2. A method as claimed in claim 1, wherein the mixture comprises an aqueous solution of the salt of B.

3. A method as claimed in claim 2, wherein the first temperature is approximately equal to the boiling point of the aqueous solution.

4. A method as claimed in any preceding claim, wherein the separation is achieved by centrifuging, filtering or rinsing.

5. A method as claimed in any preceding claim, wherein M is Mn.

6. A method as claimed in any preceding claim, wherein y is in the range from greater than 1 to about 2.

7. A method as claimed in any one of claims 1 to 5, wherein the starting substance is selected from the group consisting of solid solutions α-MnOOH, β-MnOOH, γ-MnOOH and $Mn(OH)_2$.

8. A method as claimed in any preceding claim, wherein B is lithium.

9. A method as claimed in claims 7 and 8, wherein B is lithium and the starting substance is solid solution γ-MnOOH.

10. A method as claimed in claim 8 for preparing LT-$LiMnO_2$ wherein the element B is lithium and the starting substance is solid solution γ-MnOOH.

11. A method as claimed in any one of claims 1 to 10, wherein said drying takes place at a second temperature which is in the range of from 100 to 350°C.

12. A method as claimed in claim 8 for preparing a solid solution spinel $LiMn_2O_4$, wherein a starting substance which is solid solution γ-MnOOH and a salt of lithium have been utilised in step (a) and wherein, in step (e) the intermediate solid solution $H_{y'-y}Li_yMnO_z$ is heated at a second temperature which is above about 350°C to achieve structural rearrangement of the intermediate solid solution to a spinel structure.

13. A method as claimed in any one of claims 9 to 12, wherein the salt of B is lithium hydroxide.

**14.** A method as claimed in any one of claims 1 to 3 and any one of claims 8 to 13, wherein M is Fe, Co or Ni.

**Patentansprüche**

1. Verfahren zur Herstellung einer festen Lösung mit der empirischen Formel

$$B_yMO_z \qquad\qquad (I)$$

worin ist:

B      ein Element, ausgewählt aus Li, Na, K, Rb, Cs, Mg und Ca;
y      eine Zahl über 0,5 bis etwa 2;
z      eine Zahl von etwa 1,5 bis etwa 3; und
M      ein Übergangselement, ausgewählt aus Mn, Fe, Ni, Co, V, Cr und Sc;

umfassend

(a) Auswählen einer wasserunlöslichen Ausgangssubstanz, die eine feste Lösung ist mit der empirischen Formel

$$H_{y'}MO_z \qquad\qquad (II)$$

und einer Menge eines wasserlöslichen Salzes mit B, das einen Überschuss von y' Mol B bereitstellt, wobei B wie oben definiert ist; y' eine Zahl von etwa 1 bis etwa 2 ist und z eine Zahl von etwa 1,5 bis etwa 3 ist und gleich oder verschieden vom z-Wert in $B_yMO_z$;
(b) Herstellen eines Gemisches aus der Ausgangssubstanz, dem Salz und Wasser;
(c) Unterwerfen des Gemisches einer ersten Temperatur über etwa 0°C und unter etwa 300°C, wodurch das Element H in der Ausgangssubstanz zumindest teilweise mit dem Element B ionengetauscht wird, so dass man eine feste Zwischenprodukt-Lösung erhält mit der empirischen Formel

$$H_{y'-y}B_yMO_z \qquad\qquad (III)$$

welche im Wesentlichen die Struktur der Ausgangssubstanz $H_{y'}MO_z$ besitzt, mit y≤y' und einem z-Wert, der gleich dem z in $H_{y'}MO_z$ ist;
(d) Abtrennen der festen Zwischenprodukt-Lösung $H_{y'-y}B_yMO_z$ vom Wasser, das zugegen ist, und vom restlichen Salz mit B; und
(e) Trocknen der festen Zwischenprodukt-Lösung, so dass der verbliebene Wasserstoff größtenteils entfernt wird und man die feste Lösung (I) erhält, die im Wesentlichen frei von Wasserstoff ist.

2. Verfahren nach Anspruch 1, wobei das Gemisch eine wässrige Lösung eines Salzes von B umfasst.

3. Verfahren nach Anspruch 2, wobei die erste Temperatur etwa gleich der Siedetemperatur der wässrigen Lösung ist.

4. Verfahren nach einem vorhergehenden Anspruch, wobei das Abtrennen mittels Zentrifugieren, Filtrieren oder Spülen erfolgt.

5. Verfahren nach einem vorhergehenden Anspruch, wobei M Mn ist.

6. Verfahren nach einem vorhergehenden Anspruch, wobei y von über 1 bis etwa 2 reicht.

7. Verfahren nach einem der Ansprüche 1 bis 5, wobei die Ausgangssubstanz ausgewählt ist aus der Gruppe mit den festen Lösungen α-MnOOH, β-MnOOH, γ-MnOOH und Mn(OH)$_2$.

8. Verfahren nach einem vorhergehenden Anspruch, wobei B Lithium ist.

9. Verfahren nach den Ansprüchen 7 und 8, wobei B Lithium ist und die Ausgangssubstanz die feste Lösung γ-MnOOH ist.

**10.** Verfahren nach Anspruch 8 zum Herstellen von LT-LiMnO$_2$, wobei das Element B Lithium ist und die Ausgangssubstanz die feste Löstung γ-MnOOH ist.

**11.** Verfahren nach einem der Ansprüche 1 bis 10, wobei das Trocknen bei einer zweiten Temperatur erfolgt, die von 100 bis 350°C reicht.

**12.** Verfahren nach Anspruch 8 zum Herstellen einer festen Lösung LiMn$_2$O$_4$-Spinell, wobei eine Ausgangssubstanz die feste Lösung γ-MnOOH ist, in Schritt (a) ein Lithiumsalz verwendet wird, und in Schritt (e) die feste Zwischenprodukt-Lösung H$_{y'-y}$Li$_y$MnO$_z$ auf eine zweite Temperatur erhitzt wird, die über etwa 350°C liegt, so dass sich die feste Zwischenprodukt-Lösung strukturmäßig in eine Spinellstruktur umordnet.

**13.** Verfahren nach einem der Ansprüche 9 bis 12, wobei das Salz von B Lithiumhydroxid ist.

**14.** Verfahren nach einem der Ansprüche 1 bis 3 und einem der Ansprüche 8 bis 13, wobei M Fe, Co oder Ni ist.

**Revendications**

**1.** Méthode pour préparer une solution solide répondant à la formule empirique :

$$B_yMO_z \qquad (I)$$

où B représente un élément sélectionné parmi Li, Na, K, Rb Cs, Mg et Ca, y est un nombre supérieur à 0,5 et pouvant aller jusqu'à 2 et z est un nombre compris entre 1,5 et 3 et M est un élément de transition sélectionné parmi Mn, Fe, Ni, Co, V, Cr et Sc qui comprend :

   (a) la sélection d'une substance de départ insoluble dans l'eau qui est une solution solide répondant à la formule empirique :

$$H_{y'}MO_z \qquad (II)$$

   et une quantité de sel de B soluble dans l'eau fournissant un excès de y' molécules de B, où B est défini comme précédemment et y' est un nombre compris entre 1 et 2 et z est un nombre compris entre 1,5 et 3, et qui peuvent avoir la même valeur ou une valeur différente de celle de z définie dans B$_y$MO$_z$,
   (b) la préparation d'un mélange de la substance de départ, de l'eau et du sel,
   (c) la soumission du mélange à une première température supérieure à 0°C et inférieure à 300°C environ pour laquelle l'élément H de la substance de départ est au moins partiellement transformé en ion échangé avec l'élément B pour produire une solution solide intermédiaire de formule enpirique :

$$H_{y'-y}B_yMO_z \qquad (III)$$

   ayant essentiellement la structure de la dite substance de départ H$_{y'}$MO$_z$ , avec y <= y' et z ayant la même valeur que celle de z dans H$_{y'}$MO$_z$,
   (d) la séparation de la dite solution solide intermédiaire H$_{y'-y}$B$_y$MO$_z$ de l'eau présente et du sel résiduel de B, et
   (e) le séchage de la dite solution solide intermédiaire pour retirer la plupart de l'hydrogène restant et produire la dite solution solide (I) essentiellement exempte d'hydrogène.

**2.** Méthode selon la revendication 1, dans laquelle le mélange comprend une solution aqueuse de sel de B.

**3.** Méthode selon la revendication 2, dans laquelle la première température est approximativement égale au point d'ébullition de la solution aqueuse.

**4.** Méthode selon l'une quelconque des revendications précédentes, dans laquelle la séparation est obtenue par centrifugation, filtrage ou rinçage.

**5.** Méthode selon l'une quelconque des revendications précédentes, dans laquelle M est représenté par Mn.

**6.** Méthode selon l'une quelconque des revendications précédentes, dans laquelle y est un nombre supérieur à 1 et pouvant aller jusqu'à 2 environ.

7. Méthode selon l'une quelconque des revendications 1 à 5, dans laquelle la substance de départ est sélectionnée dans le groupe constitué par les solutions solides de $\alpha$-MnOOH, $\beta$-MnOOh, $\gamma$-MnOOH et Mn(OH)$_2$.

8. Méthode selon l'une quelconque des revendications précédentes, dans laquelle B est le lithium.

9. Méthode selon les revendications 7 et 8, dans laquelle B est le lithium et la substance de départ une solution solide $\gamma$-MnOOH.

10. Méthode selon la revendication 8 pour la préparation de LT-LiMnO$_2$, dans laquelle l'élément B est le lithium et la substance de départ une solution solide $\gamma$-MnOOH.

11. Méthode selon l'une quelconque des revendications 1 à 10, dans laquelle ledit séchage est réalisé à une seconde température qui se situe entre 100 et 350°C.

12. Méthode selon la revendication 8 pour la préparation d'une solution solide de spinelle LiMn$_2$O$_4$, dans laquelle la substance de départ, qui est une solution solide $\gamma$-MnOOH et un sel de lithium ont été utilisés au cours de la phase (a), et dans laquelle au cours de la phase (e) la solution solide intermédiaire H$_{y'-y}$Li$_y$MO$_z$ est chauffée à une seconde température qui est supérieure à environ 350°C afin de parfaire le réarrangement structural de la solution solide intermédiaire vers une structure spinelle.

13. Méthode selon l'une quelconque des revendications 9 à 12, dans laquelle le sel de B est l'hydroxyde de lithium.

14. Méthode selon l'une quelconque des revendications 1 à 3 et 8 à 13, dans laquelle M est constitué par Fe, Co ou Ni.

FIG. I

## FIG. 2

(−) STAINLESS STEEL CELL CAP

POLYPROPYLENE GASKET

MILD STEEL DISC SPRING

STAINLESS STEEL DISC

LITHIUM METAL

SEPARATOR

CATHODE

(+) CORROSION RESISTANT STAINLESS STEEL CELL CAN

FIG. 3

350°C

FIG. 4

FIG. 5

FIG. 6

FIG. 7

FIG. 8

EP 0 624 552 B1

FIG. 9

FIG. 10

22

FIG. II

FIG. 12

FIG. 13

FIG. 14

FIG. 15

HEATED LiOH TREATED EMD

FIG. 17

TGA

FIG. 16

EP 0 624 552 B1